(19) Europäisches Patentamt
European Patent Office
Office européen des brevets

(11) Numéro de publication : **0 017 527**
**B1**

(12) **FASCICULE DE BREVET EUROPÉEN**

(45) Date de publication du fascicule du brevet : **19.05.82**

(51) Int. Cl.³ : **C 01 B 7/14**, G 21 F 9/04

(21) Numéro de dépôt : **80400333.3**

(22) Date de dépôt : **14.03.80**

(54) **Procédé d'extraction de l'iode.**

(30) Priorité : **30.03.79 FR 7908004**

(43) Date de publication de la demande : **15.10.80 (Bulletin 80/21)**

(45) Mention de la délivrance du brevet : **19.05.82 Bulletin 82/20**

(84) Etats contractants désignés : **BE DE FR GB IT NL SE**

(56) Documents cités :
**FR - A - 2 411 801**
**US - A - 4 013 780**

(73) Titulaire : **P C U K PRODUITS CHIMIQUES UGINE KUHLMANN**
**Service Propriété Industrielle Tour Manhattan**
**F-92087 Paris La Défense 2 Cedex 21 (FR)**

(72) Inventeur : **Person, Lucien**
**132 rue du Président Wilson**
**F-92300 Levallois-Perret (FR)**

(74) Mandataire : **Bernard, Nicole et al**
**PCUK Produits Chimiques Ugine Kuhlmann Service Propriété Industrielle Tour Manhattan - Cedex 21**
**F-92087 Paris la Défense 2 (FR)**

**EP 0 017 527 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 18, rue St-Denis, 75001 Paris, France

## Procédé d'extraction de l'iode

Le procédé de la présente invention est destiné à extraire l'iode des effluents liquides en vue de la préparer industriellement ou de l'éliminer des effluents qu'il pollue.

L'iode est très disséminé dans la nature et sa préparation industrielle pose en particulier le problème de sa concentration à partir de solutions aqueuses. Le même problème se pose lors de sa récupération pour des raisons économiques, à partir d'effluents liquides. Il est également important de concentrer l'iode radio-actif libéré lors du traitement des combustibles nucléaires en vue de sa récupération ou de son élimination par stockage.

Différentes techniques de concentration de l'iode contenu en faibles doses dans des solutions aqueuses ont été décrites.

L'iode dissous peut être adsorbé par des corps poreux tels que charbon activé, zéolithe, alumine, magnésie, gel de silice, tamis moléculaire, poudre de verre. Le pouvoir adsorbant de ces corps peut être très important lorsque les solutions à extraire sont fortement chargées en iode, mais est insuffisant dans le cas où ces solutions contiennent de très faibles concentrations d'iode. Ce pouvoir adsorbant peut être amélioré par imprégnation des corps poreux par un métal ou un sel métallique réactif vis-à-vis de l'iode. Il se forme alors des iodures et l'élution présente des difficultés (Nouveau Traité de Chimie Minérale de Paul Pascal, Masson éditeur, tome XVI p. 451 à 477).

L'iode en solution aqueuse peut être fixé sur les résines échangeuses d'anions (voir Chemical Abstracts vol. 74, n° 8, référence 33 067). Cependant, cette fixation n'est possible que si les solutions ne contiennent pas d'anions susceptibles de se fixer préférentiellement à l'iode sur ces résines. La régénération de ces résines transforme l'iode fixé en iodure métallique, ce qui nécessite une oxydation pour récupérer l'iode.

Dans son brevet français 2 411 801, la demanderesse a mis au point un procédé permettant de fixer l'iode en solution aqueuse sur des résines possédant des groupements éthoxy à caractère non ionique sans retenir les acides ou anions présents en solution, en les conservant à l'état élémentaire sur résine avec la possibilité de l'éluer soit à l'état élémentaire soit sous forme combinée. On obtient ainsi l'iode sous forme concentrée. Mais ceci nécessite deux opérations, l'une de fixation, l'autre d'élution.

L'iode pourrait être obtenu sous forme concentrée en une seule étape à partir de solutions aqueuses, par extraction liquide-liquide, si le pouvoir d'extraction des solvants de l'iode, non miscibles à l'eau, était suffisant. Cependant, les solvants les plus connus de l'iode, tels que le tétrachlorure de carbone, le chloroforme, le sulfure de carbone, le benzène, le kérosène, le phosphate de tributyle ont un pouvoir d'extraction de l'iode faible, ce qui conduit d'une part, à manipuler des quantités importantes de solvant pour réaliser l'extraction, d'autre part, à obtenir des solutions d'iode peu concentrées.

La demanderesse a mis au point un procédé qui permet d'extraire l'iode élémentaire non combiné à partir de solutions aqueuses par de faibles quantités de solvants, et d'obtenir l'iode sous forme concentrée en une seule étape.

L'extraction de l'iode élémentaire par le procédé de l'invention est sélective et peut se faire en présence d'acides forts tels que les acides sulfurique, nitrique et iodhydrique, de sels, tels que les sulfate de sodium, nitrate de sodium, chlorure de sodium, bromure de sodium et iodure de potassium.

Les autres halogènes peuvent être également extraits par le procédé de l'invention, mais le brome, le chlore et le fluor réagissent sur les solvants d'extraction et les dégradent partiellement.

Le procédé de l'invention consiste à extraire l'iode par des solvants non miscibles à l'eau possédant des groupements éther à caractère non ionique du type

$$-(O\underset{\displaystyle R}{\underset{|}{C}}H - CH_2)_nO-$$

où n est un nombre jusqu'à 200 et R un groupement méthyle ou/et éthyle.

Les composés utilisés dans le procédé de l'invention peuvent donc être à la fois propoxylés et butoxylés.

Les groupements propoxy ou butoxy sont liés au reste d'un composé à caractère hydrophobe comportant un ou plusieurs atomes d'hydrogène labiles tels que les monoalcools, polyols, phénol, phénols substitués, acides carboxyliques.

Les produits de l'invention qui sont bien connus comme matières de base pour la fabrication des mousses et résines de polyuréthanes ainsi que pour la préparation des lubrifiants et fluides hydrauliques sont décrits en particulier dans le livre « Synthetic Lubricants » de REIGH C. GUNDERSON et ANDREW HART (Reinhold publishing Corporation).

L'extraction de l'iode des solutions aqueuses par les produits de l'invention s'effectue par les techniques connues de l'extraction liquide-liquide, à un ou plusieurs étages.

Les extractions selon le procédé de l'invention peuvent se faire en présence d'un second solvant, tel que le chloroforme ou le tétrachlorure de carbone qui sont miscibles avec les produits de l'invention et dont la présence facilite la séparation des phases. L'ajouté de ce second solvant peut aller jusqu'à deux

fois la quantité utilisée des produits selon l'invention.

L'iode est récupéré à partir du solvant extracteur par des techniques connues comme l'évaporation de l'iode ou la précipitation d'iodures insolubles et le solvant est recyclé pour une nouvelle extraction.

Le procédé de la présente invention qui permet d'obtenir à l'état concentré l'iode qui peut se trouver à l'état très dilué dans certaines solutions aqueuses, peut s'intégrer dans les diverses techniques de la fabrication industrielle de l'iode. Il permet d'extraire l'iode des effluents pollués en vue de la récupération de l'iode ou de la purification des effluents.

Les solvants à groupement propoxy ou/et butoxy peuvent extraire l'iode radio-actif, en particulier les isotopes 129 et 131, de l'iode libéré lors du traitement des combustibles nucléaires.

Cette extraction peut être réalisée dans les conditions imposées par le traitement des combustibles irradiés, c'est-à-dire à partir de solutions aqueuses d'acide nitrique.

Les exemples suivants illustrent l'invention sans toutefois la limiter :

Exemple 1 à 4

Un litre de solution aqueuse contenant une certaine quantité d'iode et une quantité double d'iodure de potassium sont agités pendant 30 minutes avec un alcool en C13-C15 propoxylé par 10 molécules d'oxyde de propylène. On arrête l'agitation et les deux phases se séparent. Il reste dans la solution aqueuse la totalité de l'iodure de potassium et une partie de l'iode introduit. On en déduit la quantité d'iode extraite, la quantité d'iode fixée par kilogramme de solvant, et le pourcentage d'iode extrait par rapport à la quantité introduite.

Dans les conditions de cet exemple, en faisant varier la quantité de solvant d'extraction, celle de l'iode et celle de l'iodure de potassium qui reste toujours égale à 2 fois celle de l'iode, les résultats suivants sont obtenus :

| Quantité d'alcool en C13-C15 propoxylé par 10 molécules d'O.P. | Quantité d'iode dans la solution aqueuse avant extraction | Quantité d'iode extraite | Quantité d'iode fixée par kg de solvant | % d'iode extrait par rapport à l'iode introduit |
|---|---|---|---|---|
| 1 g | 100 mg | 80 mg | 80 g | 80 |
| 10 g | 2,50 g | 2,49 g | 249 g | 99,6 |
| 10 g | 5,00 g | 4,94 g | 494 g | 98,8 |
| 10 g | 10,00 g | 8,73 g | 873 g | 87,3 |

Exemples 5 à 8

Dans les conditions des exemples 1 à 4, on effectue des extractions avec de l'alcool en C13-C15 propoxylé par 20 molécules d'oxyde de propylène.

Les résultats suivants sont obtenus :

(Voir Tableau, p. 4).

| Quantité d'alcool en C13-C15 propoxylé par 20 molécules d'O.P. | Quantité d'iode dans la solution aqueuse avant extraction | Quantité d'iode extraite | Quantité d'iode fixée par kg de solvant | % d'iode extrait par rapport à l'iode introduit |
|---|---|---|---|---|
| 1 g | 100 mg | 89 mg | 89 g | 89 |
| 10 g | 2,50 g | 2,49 g | 249 g | 99,6 |
| 10 g | 5,00 g | 4,87 g | 487 g | 97,4 |
| 10 g | 10,00 g | 8,90 g | 890 g | 89 |

Exemples 9 à 12

Dans les conditions des exemples 1 à 4, on effectue des extractions avec du butanol propoxylé par 30 molécules d'oxyde de propylène.

Les résultats obtenus sont les suivants :

| Quantité de butanol propoxylé par 30 molécules d'O.P. | Quantité d'iode dans la solution aqueuse avant extraction | Quantité d'iode extraite | Quantité d'iode fixée par kg de solvant | % d'iode extrait par rapport à l'iode introduit |
|---|---|---|---|---|
| 1 g | 100 mg | 84 mg | 84 g | 84 |
| 10 g | 2,50 g | 2,48 g | 248 g | 99,2 |
| 10 g | 5,00 g | 4,50 g | 450 g | 90 |
| 10 g | 10,00 g | 9,04 g | 904 g | 90,4 |

Exemples 13 à 16

Dans les conditions des exemples 1 à 4, on effectue des extractions avec du butanol propoxylé par 42 molécules d'oxyde de propylène.

(Voir Tableau, p. 5).

| Quantité de butanol propoxylé par 42 molécules d'O.P. | Quantité d'iode dans la solution aqueuse avant extr tion | Quantité d'iode extraite | Quantité d'iode fixée par kg de solvant | % d'iode extrait par rapport à l'iode introduit |
|---|---|---|---|---|
| 1 g | 100 g | 83 mg | 83 g | 83 |
| 10 g | 2,50 g | 2,45 g | 245 g | 98,0 |
| 10 g | 5,00 g | 3,98 g | 398 g | 79,6 |
| 10 g | 10,00 g | 8,54 g | 854 g | 85,4 |

Exemples 17 à 20

Dans les conditions des exemples 1 à 4, on effectue des extractions avec du triméthylolpropane propoxylé par 41 molécules d'oxyde de propylène.

Les résultats suivants sont obtenus :

| Quantité de triméthylolpropane propoxylé par 41 molécules d'O.P. | Quantité d'iode dans la solution aqueuse avant extraction | Quantité d'iode extraite | Quantité d'iode fixée par kg de solvant | % d'iode extrait par rapport à l'iode introduit |
|---|---|---|---|---|
| 1 g | 100 mg | 65 mg | 65 g | 65 |
| 10 g | 2,50 g | 2,48 g | 248 g | 99,2 |
| 10 g | 5,00 g | 3,73 g | 373 g | 74,6 |
| 10 g | 10,00 g | 7,41 g | 741 g | 74,1 |

Exemples 21 à 24

Dans les conditions des exemples 1 à 4, on effectue des extractions avec du butanol butoxylé par 26 molécules d'oxyde de butylène.

Les résultats obtenus sont les suivants :

| Quantité de butanol butoxylé par 26 molécules d'O.B. | Quantité d'iode dans la solution aqueuse avant extraction | Quantité d'iode extraite | Quantité d'iode fixée par kg de solvant | % d'iode extrait par rapport à l'iode introduit |
|---|---|---|---|---|
| 1 g | 100 mg | 62 mg | 62 g | 62 |
| 10 g | 2,50 g | 2,46 g | 246 g | 99,2 |
| 10 g | 5,00 g | 4,88 g | 488 g | 97,6 |
| 10 g | 10,00 g | 7,21 g | 721 g | 72,1 |

Exemples 25 à 28

Dans les conditions des exemples 1 à 4, on effectue des extractions avec du butanol butoxylé par 170 molécules d'oxyde de butylène.

Les résultats suivants sont obtenus :

| Quantité de butanol butoxylé par 170 molécules d'O.B. | Quantité d'iode dans la solution aqueuse avant extraction | Quantité d'iode extraite | Quantité d'iode fixée par kg de solvant | % d'iode extrait par rapport à l'iode introduit |
|---|---|---|---|---|
| 1 g | 100 mg | 59 mg | 59 g | 59 |
| 10 g | 2,50 g | 2,32 g | 232 g | 92,8 |
| 10 g | 5,00 g | 2,08 g | 208 g | 41,6 |
| 10 g | 10,00 g | 1,86 g | 186 g | 18,6 |

Exemples 28 à 31

5 litres d'une solution de 1,250 g d'iode (250 mg/l) dans l'acide nitrique 3 N sont agités pendant 30 minutes avec 1 g d'un solvant propoxylé ou butoxylé. On arrête l'agitation et les deux phases se séparent. De la quantité d'iode restant en solution nitrique on déduit la quantité d'iode extraite et la quantité d'iode fixée par kilogramme de solvant.

Dans les conditions de cet exemple, en faisant varier la nature du solvant d'extraction, les résultats suivants sont obtenus :

| Nature du solvant | Quantité d'iode extraite | Quantité d'iode fixée par kg de solvant | % d'iode extrait par rapport à l'iode introduit |
|---|---|---|---|
| Alcool en C13-C15 propoxylé par 20 molécules d'O.P. | 290 mg | 290 g | 23,2 |
| Butanol propoxylé par 30 molécules d'O.P. | 330 mg | 330 g | 26,4 |
| Butanol butoxylé par 26 molécules d'O.B. | 440 mg | 440 g | 35,2 |

Exemples 32 et 33

Dans les conditions des exemples 29 à 31, on effectue des extractions sur 5 litres de solution contenant 1,050 g d'iode (210 mg/l) dans l'acide nitrique 1 N.

Les résultats suivants sont obtenus :

| Nature du solvant | Quantité d'iode extraite | Quantité d'iode fixée par kg de solvant | % d'iode extrait par rapport à l'iode introduite |
|---|---|---|---|
| Alcool en C13-C15 propoxylé par 20 molécules d'O.P. | 460 mg | 460 g | 43,8 |
| Butanol propoxylé par 30 molécules d'O.P. | 680 mg | 680 g | 65 |

Exemple 34

Dans les conditions des exemples 29 à 31, on effectue des extractions sur 5 litres de solution contenant 1,200 g d'iode (240 mg/l) dans l'acide nitrique 3 N, dans lequel sont dissous 15 g de dioxyde d'azote ($NO_2$).

Les résultats suivants sont obtenus :

| Nature du solvant | Quantité d'iode extraite | Quantité d'iode fixée par kg de solvant | % d'iode extrait par rapport à l'iode introduite |
|---|---|---|---|
| Alcool en C13-C15 propoxylé par 20 molécules d'O.P. | 250 mg | 250 g | 20,8 |
| Butanol propoxylé par 30 molécules d'O.P. | 310 mg | 310 g | 25,8 |

## Revendications

1. Procédé d'extraction sélective de l'iode à partir de solutions aqueuses, consistant en une extraction liquide-liquide caractérisée par l'emploi d'un composé comportant des groupements éther à caractère non-ionique du type

$$-(O\underset{\underset{R}{|}}{C}H - CH_2)_nO -$$

où R est un groupement méthyle et/ou éthyle, et n un nombre jusqu'à 200, ces groupement étant liés au reste d'un composé à caractère hydrophobe comportant un ou plusieurs atomes d'hydrogène labiles.

2. Procédé selon la revendication 1 où le composé à caractère hydrophobe est un alcool, un polyol, un phénol, un phénol substitué ou un acide carboxylique.

3. Procédé selon la revendication 1 où l'iode extrait est de l'iode radio-actif.

4. Procédé selon la revendication 1 où l'iode extrait est constitué des isotopes 129 et 131 libérés durant le traitement de combustibles nucléaires.

## Claims

1. Process for the selective extraction of iodine from aqueous solutions, consisting of a liquid-liquid extraction which is characterised by the use of a compound containing ether groups of non-ionic character, of the type

$$-(O\underset{\underset{R}{|}}{C}H - CH_2)_nO -$$

in which R is a methyl and/or ethyl group and n is a number up to 200, these groups being bonded to the radical of a compound of hydrophobic character, containing one or more labile hydrogen atoms

2. Process according to Claim 1 in which the compound of hydrophobic character is an alcohol, a polyol, a phenol, a substituted phenol or a carboxylic acid.

3. Process according to Claim 1, in which the iodine extracted is radioactive iodine.

4. Process according to Claim 1, in which the iodine extracted consists of the 129 and 131 isotopes released during the treatment of nuclear fuels.

## Ansprüche

1. Verfahren zur selektiven Extraktion von Jod aus wässrigen Lösungen durch Flüssig-Flüssig-Extraktion, dadurch gekennzeichnet, daß man eine Verbindung mit nichtionischen Äthergruppen des Typs

$$-(O\underset{\underset{R}{|}}{C}H - CH_2)_nO -$$

verwendet, bei der R eine Methyl- und/oder Äthylgruppe und n eine Zahl bis 200 ist, wobei diese Gruppen mit dem Rest einer Verbindung mit hydrophobem Charakter verbunden sind, die ein oder mehrere bewegliche Wasserstoffatome aufweist.

2. Verfahren nach Anspruch 1, bei dem die Verdindung mit hydrophobem Charakter ein Alkohol, ein Polyol, ein Phenol, ein substituiertes Phenol oder eine Carbonylsäure ist.

3. Verfahren nach Anspruch 1, bei dem das extrahierte Jod radioaktives Jod ist.

4. Verfahren nach Anspruch 1, bei dem das extrahierte Jod aus den Isotopen 129 und 131 besteht, die während der Behandlung von Kernbrennstoffen freigesetzt werden.